# EUROPEAN PATENT SPECIFICATION

(11) **EP 3 080 547 B1**
(45) Date of publication and mention of the grant of the patent: **15.11.2017**
(21) Application number: 14830646.7
(22) Date of filing: 12.12.2014
(51) Int. Cl.: G01B 11/14, B25B 23/00

(54) **DEVICE AND METHOD FOR CHECKING THE CORRECT FITTING OF A CONNECTION ORGAN HAVING A HEAD, RELATIVE TO A FITTING SURFACE**
VORRICHTUNG UND VERFAHREN ZUR ÜBERPRÜFUNG DES FESTSITZES EINES STECKVERBINDUNGSORGANS MIT EINEM KOPF, RELATIV ZUR PASSFLÄCHE
DISPOSITIF ET PROCÉDÉ POUR CONTRÔLER L'AJUSTEMENT CORRECT D'UN ORGANE DE CONNEXION MUNI D'UNE TÊTE PAR RAPPORT À UNE SURFACE D'AJUSTEMENT

(30) Priority: 13.12.2013 IT BO20130687
(43) Date of publication of application: 19.10.2016
(73) Proprietor: AEA S.r.l., 60030 Rosora (AN) (IT)
(72) Inventor: CRISTALLI, Cristina, I-60035 Jesi (IT); CALBUCCI, Vittorio, I-60036 Montecarotto (IT); CERRETANI, Fabio, I-63813 Monte Urano (IT); STROPPA, Lorenzo, I-60035 Jesi (IT)
(74) Representative: Manconi, Stefano
(86) International application number: PCT/IB2014/066862
(87) International publication number: WO 2015/087302

(56) References cited:
- DE-A1-102005 014 901
- GB-A- 783 524
- JP-A- H06 114 651
- JP-A- S61 132 807
- JP-A- 2006 133 074

## Description

### TECHNICAL FIELD

The present invention relates to a device for checking the correct fitting, relative to a fitting surface, of a connection organ having a head, and to a corresponding method for checking the fitting of the connection organ.

In particular, the invention finds advantageous, but not exclusive, application in the assembly of connection organs, such as screws, rivets and fasteners in general, used to block two or more elements between them, to which the following description will make explicit reference without thereby losing generality.

After mounting a screw or a rivet for the locking of two elements, for example two mechanical parts, it is advisable to check that the head of the screw or rivet is as close as possible to the fitting surface. The presence of a under-head gap between the lower surface of the head and the fitting surface is, indeed, indicative of an incorrect or incomplete mounting of the screw or rivet.

### BACKGROUND ART

Some of the known techniques for the checking of the correct fitting of a screw or rivet provide for manually measuring the extent of the gap between the head of the screw or rivet and the fitting surface with appropriate instruments. For instance, a common practice is to measure the gap between the head of a rivet and the fitting surface by means of the so-called tape feelers having respective thicknesses which differ by one tenth of a millimeter and that an operator tries to insert one after the other in the gap until it finds the feeler or the combination of feelers with the right thickness, said thickness being an estimate of the gap to be measured. Other techniques are based primarily on the visual capabilities of the operator, who must understand whether the fitting meets certain requirements on the basis of a naked-eye observation of the head of each mounted screw or rivet.

As one can well understand, the reliability of the manual measurement techniques is highly dependent on the operator's expertise. Considering that very often thousands of screws and rivets have to be controlled in a short time, it is evident that these techniques can lead to a high number of errors.

Related prior art documents are patent document DE 10 2005 014 901, which describes checking the correct fastening of a screw by determining the gap between the lower side of the screw head and the surface, and patent document JP H06 114651, which describes the mechanical checking of the proper fastening of a screw.

### DISCLOSURE OF INVENTION

The aim of the present invention is to provide a device for checking the correct fitting of screws or rivets, which allows to automate the checking and to reduce human error and, at the same time, which is inexpensive and easy to produce.

According to the present invention, a device and a method for checking the correct fitting of a connection organ having a head with respect to a fitting surface, are provided as defined in the appended claims.

### BRIEF DESCRIPTION OF THE DRAWINGS

For a better understanding of the present invention, a preferred embodiment will now be described, purely as a nonlimiting example and with reference to the accompanying drawings, in which:
- Figure 1 shows, according to a partly simplified perspective view, the checking device according to the teaching of the present invention;
- Figure 2 shows, in a side view, the internal structure of the device of Figure 1;
- Figure 3 illustrates an example of an image of the connection organ acquired and processed by the device of Figure 1 in order to check the correct fitting thereof; and
- Figure 4 shows six graphs representing measurements carried out on the image of Figure 3.

### BEST MODE FOR CARRYING OUT THE INVENTION

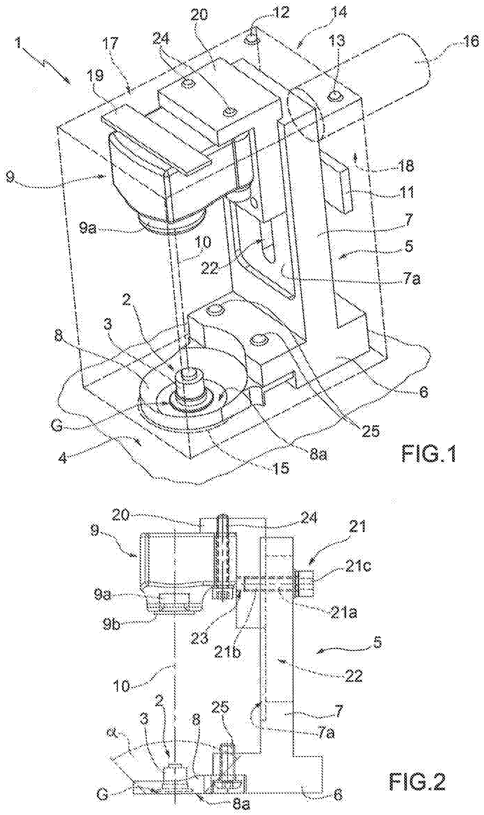

In Figure 1, number 1 indicates, as a whole, the checking device of the present invention having the purpose of checking the correct fitting of a connection organ, labelled with number 2, constituted for example by a rivet, having a head 3, with respect to a mounting surface 4.

The checking device 1 comprises: a frame 5, which comprises a base 6 to lean against the fitting surface 4 and an upright 7 integral with the base 6; a truncated cone-shaped convergent mirror 8, which is fixed to the base 6 so as to lay during use, with its smaller opening 8a on the fitting surface 4 in order to surround the head 3; a video camera 9, which comprises an optical lens 9a having an optical axis 10 and coupled to the upright 7 with its optical lens 9a facing the mirror 8 and preferably, but not necessarily, being coaxial with the mirror 8 to acquire at least one image, reflected by the mirror 8, of the under-head gap, indicated with G in Figure 1, measurable between the lower surface of the head 3 and the fitting surface 4; a processing unit 11, which is configured to process the captured image in order to measure the under-head gap G and to generate at least one signal indicating the correct or incorrect fitting of the connection organ 2 on the basis of the measured values; and two LEDs, for example a green LED 12 and a red LED 13, controlled as a function of the aforementioned signal.

The test device 1 also comprises an outer shell for protection, illustrated in a simplified manner by a dashed line and indicated with number 14 in figure 1, which is integral with the frame 5, and in particular with the upright 7, and which encloses the frame 5 itself, the video camera 9 and the mirror 8. The shell 14 presents a lower opening 15 in correspondence of the opening 8a of the mirror 8, to allow insertion of the head 3 in the opening 8a. The shell 14 comprises a handle 16 to enable an operator (not shown) to correctly hold the checking device 1 during use, i.e., with the opening 8a lying on the mounting surface 4 and centered on the head 3. The LEDs 12 and 13 are arranged on an upper wall 17 of the shell 14 so as to be clearly visible to the operator during use. The processing unit 11 is mounted inside the shell 14, for example against a rear wall 18 of the shell 14.

The checking device 1 further comprises an image display 19, which is constituted, for example, by an LCD display which is positioned on the wall 17 of the shell 14 to be clearly visible to the operator during the use and which is connected directly to the video camera 9 to help the operator to center the mirror 8 on the head 3 of the connection organ 2, as will be explained later in this document.

With reference to Figures 1 and 2, the frame 5 further comprises a L-shaped bracket support 20, which is fixed on the video camera 9 and which is coupled in a sliding manner to the upright 7 in order to move parallel to the optical axis 10 along a longitudinal slide 7a formed in the upright 7 in order to adjust the framing and/or the focusing of the video camera 9. The bracket 20 is lockable against the upright 7 by means of a screw 21 (Figure 2) whose shank 21a goes through a longitudinal slit 22 of the upright 7 without interference and whose threaded portion 21b is screwed into a threaded hole 23 formed in the largest side of the bracket 20 to clamp the upright 7 between the head 21c of the screw 21 and the bracket 20. The video camera 9 is fixed to the shorter side of the bracket 20 by means of two screws 24. The mirror 8 is fixed to the base 6 by means of two more screws 25.

The mirror 8 has an angular opening α (Figure 2) of a value substantially comprised between 1/5*π and 4/9*π radians, i.e., between 36 and 80 sexagesimal degrees, and preferably equal to 1/3*π radians, i.e., 60 degrees. In this way, the image reflected on the mirror 8 as it appears to the video camera 9 comprises an annular shape that corresponds to the lateral surface of the head 3 and an annular shadow, internal to the said annular shape, and having a generally not uniform thickness, which corresponds to the under-head gap G between the head 3 and the fitting surface 4.

The video camera 9 is provided with an illuminator 9b (Figure 2), which has an annular shape, is mounted preferably coaxially and peripherally to the optical lens 9a and is directed towards the mirror 8 to emit a beam of light substantially parallel to the optical axis 10 so as to illuminate from the top essentially the area enclosed by the opening 8a of the mirror 8. The illuminator 9b is constituted, for example, by a plurality of white or coloured light LEDs arranged around the outer circular perimeter of the lens 9a. The beam of light emitted from the illuminator 9b illuminates the head 3 from above, thus enhancing the contrast between the lateral surface of the head 3 and the shadow under the head 3.

The checking device 1 comprises a dedicated keypad (not shown) to allow the operator to enter commands and data in the device itself, a control unit (not shown) coupled to, or integrated in, the processing unit 11 to control the video camera 9, the illuminator 9b and the LEDs 12 and 13 as a function of commands entered by the operator and of signals generated by the processing unit 11, and a battery (not shown) to supply power to the checking device 1.

According to a further embodiment of the invention, the display 19 is a touch screen monitor so as to make the presence of the keypad unnecessary.

During use, the checking device 1 shall be initially aligned to the connection organ 2. For this purpose, the display 19 displays the video images acquired by the video camera 9 in such a way that the operator can see a live view of the area of the mirror 8 while laying it on the fitting surface 4 around the head 3, by trying to centre the mirror 8 with respect to the head 3. To ease the task of the operator, the video camera 9 generates and superimposes a virtual viewfinder to the displayed video images.

According to a further embodiment not shown of the invention, the checking device 1 is provided with an automatic centring system comprising one or more mechanical devices and/or software algorithms implemented in the control unit which controls the video camera 9, designed and configured for recognizing the position of the checking device 1 over the connection organ 2 and for aligning the mirror 8 and/or the video camera 9 to the connection organ 2 as a function of the recognized position.

Once the alignment phase is concluded, the operator operates the checking device 1 to check the correct fitting of the connection organ 2. The control unit turns on the illuminator 9b and controls the video camera 9 to acquire an image to be used for the measurement of the under-head gap G. The acquired image shows the under-head gap G reflected on the mirror 8 as a shadow having a substantially annular shape. The processing unit 11 is configured to perform the following processing steps on the acquired image.

First of all, a segmentation of the acquired image is performed to locate a portion of the image that includes the shadow defined by the under-head gap G. The portion of the image is scanned along a plurality of scanning lines which are preferably radial with respect to the optical axis 10 so as to obtain, for each scanning line, a correspondent measured value of the under-head gap G as a function of the number of the pixels having a light intensity which is lower than a certain threshold value and counted along the scanning line. The counted number of pixel can be an integer or fractional number.

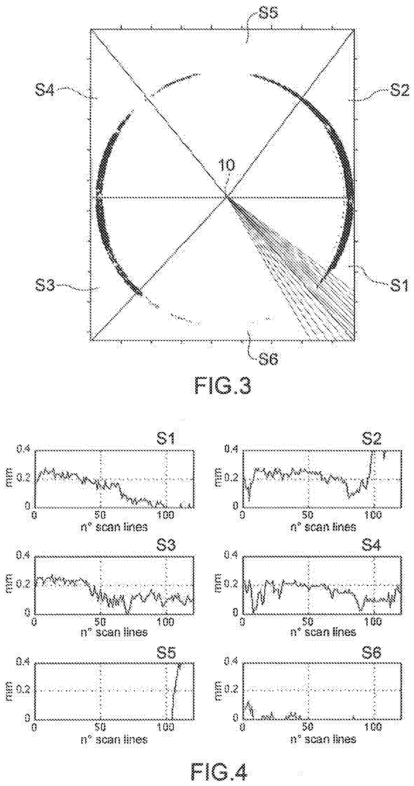

With reference to Figure 3, which shows an example of the aforesaid portion of the acquired image wherein only the pixels having a light intensity lower that the threshold value are shown in black, the portion of the image is divided into a plurality of radially contiguous sectors, indicated by S1-S6, each of which is scanned along a respective number of scanning lines which are radil with respect of axis 10. For the sake of simplicity, Figure 3 shows the image portion divided into only six sectors S1-S6, each of which has a respective number of scanning lines such that the angular apertures between the scanning lines, i.e. the angles in the middle between pairs of adjacent scanning lines, are preferably comprised between 0.5/180*π and 1/60*π radians, e.g. between 0.5 and 3 sexagesimal degrees. For the sake of simplicity, Figure 3 shows only some of the scanning lines in sectors S1 and S6. The example of Figure 3 shows how the annular shadow defined by the under-head gap has a not uniform thickness. Sectors S5 and S6 are broader because they are relative to portions of the anular shadow with a lower thickness and thus the density of scanning lines in sectors S5 and S6 is smaller than that in the other sectors S1-S4.

For each sector, the pixles having a light intensity lower than the threshold value TI intercepted by the line itself are counted so as to obtain a respective value of thickness of the annular shadow measured in pixel, i.e. a respective value of the thickness of the under-head gap measured in pixels. The thickness values measured in pixels are multiplied by a corresponding set of calibration coefficients, each of which expresses the distance in millimeters between two consecutive pixels along the corresponding scanning line, so as to obtain the corresponding values of thickness measured in millimeters. Figure 4 shows six graphs, each of which is relative to a respective sector of the sectors S1-S6 of Figure 3 and expresses the measured thickness values in millimetres as the scanning lines of the sector vary.

Finally, the processing unit 11 compares all of the measured thickness values with a threshold value TS previously set by the operator and generates, on the basis of this comparison, a signal which is indicative of correct or incorrect fitting of the connection organ 2. If all the measured thickness values are below the threshold value TS, then a signal of positive response is generated and is used by the control unit to turn on the green LED 12, otherwise a signal of a negative response is generated, i.e. an alarm signal, which is used by the control unit to turn on the red LED 13.

The subdivision of the portion of the image in a certain number of sectors comprising respective numbers of scanning lines is equivalent, in terms of overall density of scanning lines, to a subdivision into a greater number of sectors in which the scanning lines coincide with the boundary lines of the sectors. In particular, according to a further embodiment of the invention (not shown), the portion of the image is divided into a number of radially contiguous sectors such that the respective angular apertures, i.e. the angles in the middle between pairs of adjacent scanning lines, are preferably comprised between 0.5/180*π and 1/60*π radians, i.e. between 0.5 and 3 degrees. The sectors have the same angular aperture or respective angular apertures suitably modulated along the portion of the image.

According to a further development of the present invention, the processing unit 11 also verifies the correct operation of the punching machine which has applied the rivet 2 on the basis of the information related to the measured thicknesses values, i.e. it verifies, for instance, whether the punching machine uniformly presses on the head 3 of the rivet 2 on the basis of the thickness values measured along the whole perimeter of the head 3 of the rivet 2.

Although the invention described above makes particular reference to a very specific example of implementation, it is not to be considered limited to this example , falling within its scope all those variations, modifications or simplifications that would be obvious to the technician skilled in the field, which is, for example, the presence, in combination or as an alternative to LEDs 12 and 13, of a buzzer for generating an acoustic o vibration signal in addition or as an alternative to the light signal of the LEDs 12 and 13.

## Claims

1. A device for checking the correct fitting of a connection organ (2) having a head (3) relative to a fitting surface (4), the device (1) comprising: a frame (5), which comprises a base (6) configured to lean against the fitting surface (4) and an upright (7) integral with the base (6); a truncated cone-shaped convergent mirror (8), which is fixed to the base (6) and configured to lay, during use, with its smaller opening (8a) on the fitting surface (4) in order to surround the head (3); image capturing means (9), which are coupled to the upright (7) with their optical lens (9a) turned towards the mirror (8), and preferably coaxial to the latter, so as to capture at least one image, reflected by the mirror (8), of an under-head gap (G) measurable between the head (3) and the fitting surface (4); processing means (11), which are configured to process the captured image so as to measure said under-head gap (G) along a plurality of scanning lines that are preferably radial relative to the optical axis (10) of the lens (9a) and configured to generate at least one signal indicating the correct or incorrect fitting of the connection organ (2) based on a comparison between the measured values of the under-head gap (G) and a predetermined threshold value; and signalling means (12, 13), which are controlled as a function of said at least one signal.

2. A device according to claim 1, wherein said frame (5) comprises a support (20), on which said image capturing means (9) are fixed and which is coupled to said upright (7) in a sliding manner so as to move parallel to said optical axis (10), in order to be able to adjust the framing and/or the focusing of said image capturing means (9).

3. A device according to claim 1 or 2, wherein said mirror (8) has an angular aperture that substantially ranges from 1/5* π to 4/9* π radians, and is preferably equal to n /3 radians.

4. A device according to any of the claims from 1 to 3, wherein said image capturing means (9) comprise an illuminator (9b), which has preferably an annular shape and is mounted so as to be preferably coaxial and peripheral relative to said lens (9a), in order to emit a light beam such as to substantially illuminate the area enclosed by said smaller opening (8a).

5. A device according to any of the claims from 1 to 4 and comprising an image display (19), which is directly controlled by said image capturing means (9) so as to help an operator to centre said mirror (8) on the head (3).

6. A device according to claim 5 and comprising an outer shell (14), which is integral to said upright (7) and has a lower opening (15) arranged in correspondence to said smaller opening (8a); said signalling means comprising light signalling means (12, 13), which are arranged, together with said image display (19), on a wall (17) of the outer shell (14).

7. A method for checking the correct fitting of a connection organ (2) having a head (3) relative to a fitting surface (4), the method comprising:
- laying a truncated cone-shaped convergent mirror (8) with its smaller opening (8a) on the fitting surface (4), so that the smaller opening (8a) surrounds the head (3);
- capturing, by means of image capturing means (9) arranged with their optical lens (9a) turned towards the mirror (8) and preferably coaxial to the latter, at least one image, reflected by the mirror (8), of the under-head gap (G) measurable between the head (3) of the connection organ (2) and the fitting surface (4);
- measuring said under-head gap (G) on the captured image along a plurality of scanning lines that are preferably radial with respect to the optical axis (10) of the lens (9a); and
- generating at least one signal indicating the correct or incorrect fitting of the connection organ (2) based on a comparison between the measured values of the under-head gap (G) and a predetermined threshold value.

8. A method according to claim 7, wherein measuring said under-head gap (G) comprises:
- performing a segmentation of the captured image so as to identify an image portion that comprises the annular shadow defined by said under-head gap (G); and
- scanning the image portion along each one of said scanning lines so as to obtain a respective measured value of the under-head gap (G) as a function of the number of the pixel having a light intensity which is greater than a certain threshold value.

9. A method according to claim 8, wherein generating a signal indicating the correct or incorrect fitting of the connection organ (2) comprises:
- generating an alarm signal when the measured value of the under-head gap (G) relative to at last one of said scanning lines exceeds said threshold value.

10. A method according to any of the claims from 7 to 9, wherein capturing at least one image reflected by the mirror (8) comprises:
- illuminating from above the area enclosed by said smaller opening (8a) by means of a light beam generated by an illuminator (9b), which has preferably an annular shape and is arranged so as to be preferably coaxial and peripheral relative to said lens (9a), in order to improve the contrast between the lateral surface of said head (3) and the shadow under said head (3).

## Patentansprüche

1. Vorrichtung zur Prüfung der korrekten Passung eines Verbindungsorgans (2) mit einem Kopf (3) relativ zu einer Passfläche (4), umfassend: einen Rahmen (5), welcher eine Basis (6) aufweist, die so ausgebildet ist, dass sie gegen die Passfläche (4) anliegt, und einen Ständer (7), der mit der Basis (6) integral ist; einen kegelstumpfförmigen Konvergenz-Spiegel (8), welcher an der Basis (6) fixiert und derart ausgebildet ist, dass er während der Verwendung mit seiner kleineren Öffnung (8a) auf der Passfläche (4) liegt, um den Kopf (3) zu umgeben; Bilderfassungsmittel (9), welche mit dem Ständer (7) gekoppelt sind, wobei ihre optische Linse (9a) zum Spiegel (8) gerichtet ist und koaxial zum letzteren ausgerichtet ist, derart, dass mindestens ein durch den Spiegel (8) reflektiertes Bild eines Unter-Kopf Spalts (G) messbar zwischen Kopf (3) und der Passfläche (4) aufnehmbar ist; Verarbeitungsmittel (11), welche derart ausgebildet sind, dass sie das aufgenommene Bild verarbeiten, um den Unter-Kopf Spalt (G) längs einer Anzahl von Scan-Linien zu messen, die vorzugsweise radial relativ zur optischen Achse (10) der Linse (9a) sind, und derart konfiguriert sind, dass sie mindestens ein die korrekte oder unkorrekte Passung des Verbindungsorgans (2) anzeigendes Signal erzeugen, basierend auf einem Vergleich zwischen den gemessenen Werten des Unter-Kopf Spalts (G) und einem vorbestimmten Schwellwert; und Signalgebungsmittel (12, 13), welche als eine Funktion von diesem mindestens einen Signal gesteuert sind.

2. Vorrichtung nach Anspruch 1,
**dadurch gekennzeichnet, dass**
der Rahmen (5) eine Stütze (20) aufweist, auf welche die Bilderfassungsmittel (9) angeordnet sind, und welcher mit dem Ständer (7) gleitbar über eine Bewegung parallel zur optischen Achse (10) gekoppelt ist, um das Framing und/oder das Fokussieren der Bilderfassungsmittel (9) einstellen zu können.

3. Vorrichtung nach Anspruch 1 oder 2,
**dadurch gekennzeichnet, dass**
der Spiegel (8) eine Winkelöffnung aufweist, die im Wesentlichen reicht von 1/5* Π bis 4/9* Π Radiant, und vorzugsweise gleich Π /3 Radiant beträgt.

4. Vorrichtung nach einem der Ansprüche 1 bis 3,
**dadurch gekennzeichnet, dass**
die Bilderfassungsmittel (9) einen Illuminator (9b) aufweisen, welcher vorzugsweise eine ringförmige Form aufweist und derart angeordnet ist, dass er vorzugsweise koaxial und peripheral relativ zur Linse (9a) ist, um einen Lichtstrahl zu emittieren, derart, dass im Wesentlichen die durch die kleinere Öffnung (8a) eingeschlossene Fläche zu illuminieren.

5. Vorrichtung nach einem der Ansprüche 1 bis 4, und umfassend ein Bilddisplay (19), welches direkt durch die Bilderfassungsmittel (9) gesteuert ist, um einem Bedienungsmann zu unterstützen, den Spiegel (8) auf dem Kopf (3) zu zentrieren.

6. Vorrichtung nach Anspruch 5, und umfassend eine äußere Hülle (14), welche integral mit dem Ständer (7) ist und eine untere Öffnung (15) aufweist, die in Korrespondenz zur kleineren Öffnung (8a) angeordnet ist; wobei die Signalisierungsmittel Lichtsignalisierungsmittel (12, 13) umfassen, welche zusammen mit dem Bilddisplay (19) auf einer Wand (17) der Außenhülle (14) angeordnet sind.

7. Verfahren zur Prüfung der korrekten Passung eines Verbindungsorgans (2) mit einem Kopf (3) relativ zu einer Passfläche (4), wobei das Verfahren umfasst:
- Anordnung eines kegelstumpfförmigen Konvergenz-Spiegels (8) mit seiner kleineren Öffnung (8a) auf der Passfläche (4), so dass die kleinere Öffnung (8a) den Kopf (3) umgibt;
- Erfassen mindestens eines durch den Spiegel (8) des Unter-Kopf Spalts (G) messbar zwischen Kopf (3) des Verbindungsorgans (2) und der Passfläche (4) Bildes mittels Bilderfassungsmittel (9), die mit ihrer optischen Linse (9a) in Richtung auf den Spiegel (8) gedreht ist und vorzugsweise koaxial zu letzterem ist;
- Messen des Unter-Kopf Spalts (G) am aufgenommenen Bild längs einer Anzahl von Scan-Linien, die vorzugsweise radial bezüglich der optischen Achse (10) der Linse (9a) sind; und
- Erzeugen von mindestens einem Signal, welche die korrekte oder inkorrekte Anordnung des Verbindungsorgans (2) basierend auf einem Vergleich zwischen den gemessenen Werten des Unter-Kopf Spalts (G) und einem vorbestimmten Schwellwert angibt.

8. Verfahren nach Anspruch 7,
**dadurch gekennzeichnet, dass**
der Unter-Kopf Spalt (G) umfasst:
- Ausbildung einer Segmentation des aufgenommenen Bilds, um einen Bildabschnitt zu identifizieren, der den ringförmigen Schatten umfasst, der durch den Unter-Kopf Spalt (G) definiert ist; und
- Scannen des Bildabschnitts längs einer jeden der Scan-Linien, um einen entsprechenden Messwert des Unter-Kopf Spalts (G) als eine Funktion der Anzahl der Pixel zu erhalten, mit einer Lichtintensität, welche größer als ein bestimmter Schwellwert ist.

9. Verfahren nach Anspruch 8,
**dadurch gekennzeichnet, dass**
ein Signal erzeugt wird, welches die korrekte oder inkorrekte Anordnung des Verbindungsorgans (2) angibt, umfassend:
- Erzeugen eines Alarmsignals, wenn der gemessene Wert des Unter-Kopf Spalts (G) relativ zu mindestens einem der Scan-Linien den Schwellwert überschreitet.

10. Verfahren nach einem der Ansprüche 7 bis 9,
**dadurch gekennzeichnet, dass**
mindestens ein durch den Spiegel (8) reflektiertes Bild erfasst wird, umfassend:
- Illuminieren der durch die kleinere Öffnung (8a) umgebenen Fläche von oben mittels eines von einem Illuminator (9b) erzeugten Lichtstrahls, welcher vorzugsweise eine ringförmige Form aufweist und derart angeordnet ist, dass er vorzugsweise koaxial und peripheral relativ zur Linse (9a) ist, um den Kontrast zwischen der lateralen Fläche des Kopfes (3) und dem Schatten unter dem Kopf (3) zu verbessern.

## Revendications

1. Dispositif pour vérifier le montage correct d'un organe de raccordement (2) ayant une tête (3) par rapport à une surface de montage (4), le dispositif (1) comprenant : un cadre (5), qui comprend une base (6) configurée pour prendre appui contre la surface de montage (4) et un montant (7) solidaire de la base (6) ; un miroir convergent de forme tronconique (8), qui est fixé à la base (6) et configuré pour reposer, pendant l'utilisation, avec sa plus petite ouverture (8a) sur la surface de montage (4) afin d'entourer la tête (3) ; des moyens de capture d'image (9), qui sont couplés au montant (7) avec leur lentille optique (9a) tournée vers le miroir (8), et de préférence coaxiale avec ce dernier, de manière à capturer au moins une image, réfléchie par le miroir (8), d'un écartement sous-tête (G) mesurable entre la tête (3) et la surface de montage (4) ; des moyens de traitement (11), qui sont configurés pour traiter l'image capturée de manière à mesurer ledit écartement sous-tête (G) le long d'une pluralité de lignes de balayage qui sont de préférence radiales par rapport à l'axe optique (10) de la lentille (9a) et configurés pour générer au moins un signal indiquant le montage correct ou incorrect de l'organe de raccordement (2) en se basant sur une comparaison entre les valeurs mesurées de l'écartement sous-tête (G) et une valeur seuil prédéterminée ; et des moyens de signalisation (12, 13), qui sont commandés en fonction dudit au moins un signal.

2. Dispositif selon la revendication 1, dans lequel ledit cadre (5) comprend un support (20), sur lequel sont fixés lesdits moyens de capture d'image (9) et qui est couplé audit montant (7) en coulissement de manière à se déplacer parallèlement audit axe optique (10), afin de pouvoir ajuster le cadrage et/ou la focalisation desdits moyens de capture d'image (9).

3. Dispositif selon la revendication 1 ou 2, dans lequel ledit miroir (8) a une ouverture angulaire qui varie sensiblement de 1/5 x Π à 4/9 x Π radians, et est de préférence égale à Π/3 radians.

4. Dispositif selon l'une quelconque des revendications 1 à 3, dans lequel lesdits moyens de capture d'image (9) comprennent un illuminateur (9b), qui a de préférence une forme annulaire et est monté de manière à être de préférence coaxial et périphérique par rapport à ladite lentille (9a), afin d'émettre un faisceau de lumière de manière à illuminer sensiblement la zone délimitée par ladite plus petite ouverture (8a).

5. Dispositif selon l'une quelconque des revendications 1 à 4 et comprenant un afficheur d'image (19), qui est directement commandé par lesdits moyens de capture d'image (9) de manière à aider un opérateur à centrer ledit miroir (8) sur la tête (3).

6. Dispositif selon la revendication 5 et comprenant une coque externe (14), qui est solidaire dudit montant (7) et a une ouverture inférieure (15) agencée en correspondance de ladite plus petite ouverture (8a) ; lesdits moyens de signalisation comprenant des moyens de signalisation de lumière (12, 13), qui sont agencés, conjointement avec ledit afficheur d'image (19), sur une paroi (17) de la coque externe (14).

7. Procédé pour vérifier le montage correct d'un organe de raccordement (2) ayant une tête (3) par rapport à une surface de montage (4), le procédé comprenant :
- la pose d'un miroir convergent de forme tronconique (8) avec sa plus petite ouverture (8a) sur la surface de montage (4), de sorte que la plus petite ouverture (8a) entoure la tête (3) ;
- la capture, au moyen de moyens de capture d'image (9) agencés avec leur lentille optique (9a) tournée vers le miroir (8) et de préférence coaxiale avec ce dernier, d'au moins une image, réfléchie par le miroir (8), de l'écartement sous-tête (G) mesurable entre la tête (3) de l'organe de raccordement (2) et la surface de montage (4) ;
- la mesure dudit écartement sous-tête (G) sur l'image capturée le long d'une pluralité de lignes de balayage qui sont de préférence radiales par rapport à l'axe optique (10) de la lentille (9a) ; et
- la génération d'au moins un signal indiquant le montage correct ou incorrect de l'organe de raccordement (2) en se basant sur une comparaison entre les valeurs mesurées de l'écartement sous-tête (G) et une valeur seuil prédéterminée.

8. Procédé selon la revendication 7, dans lequel la mesure dudit écartement sous-tête (G) comprend :
- la réalisation d'une segmentation de l'image capturée de manière à identifier une portion d'image qui comprend l'ombre annulaire définie par ledit écartement sous-tête (G) ; et
- le balayage de la portion d'image le long de chacune desdites lignes de balayage de manière à obtenir une valeur mesurée respective de l'écartement sous-tête (G) en fonction du nombre des pixels ayant une intensité de lumière qui est plus grande qu'une certaine valeur seuil.

9. Procédé selon la revendication 8, dans lequel la génération d'un signal indiquant le montage correct ou incorrect de l'organe de raccordement (2) comprend :
- la génération d'un signal d'alarme lorsque la valeur mesurée de l'écartement sous-tête (G) par rapport à une dernière desdites lignes de balayage excède ladite valeur seuil.

10. Procédé selon l'une quelconque des revendications 7 à 9, dans lequel la capture d'au moins une image réfléchie par le miroir (8) comprend :
- l'illumination depuis le dessus de la zone délimitée par ladite plus petite ouverture (8a) au moyen d'un faisceau de lumière généré par un illuminateur (9b), qui a de préférence une forme annulaire et est agencé de manière à être de préférence coaxial et périphérique par rapport à ladite lentille (9a), afin d'améliorer le contraste entre la surface latérale de ladite tête (3) et l'ombre sous ladite tête (3).
